# EUROPÄISCHE PATENTSCHRIFT

(11) **EP 1 899 610 B1**
(45) Veröffentlichungstag und Bekanntmachung des Hinweises auf die Patenterteilung: **19.08.2009**
(21) Anmeldenummer: 06753242.4
(22) Anmeldetag: 03.06.2006
(51) Int. Cl.: F15B 1/04, F16L 55/05, F16D 25/12

(54) **HYDRAULISCHER DRUCKSPEICHER**
HYDRAULIC ACCUMULATOR
ACCUMULATEUR DE PRESSION HYDRAULIQUE

(30) Priorität: 29.06.2005 DE 102005030187
(43) Veröffentlichungstag der Anmeldung: 19.03.2008
(73) Patentinhaber: LuK Lamellen und Kupplungsbau Beteiligungs KG, 77815 Bühl (DE)
(72) Erfinder: STAUDINGER, Martin, 76275 Ettlingen (DE)
(86) Internationale Anmeldenummer: PCT/DE2006/000967
(87) Internationale Veröffentlichungsnummer: WO 2007/000128

(56) Entgegenhaltungen:
- GB-A- 1 127 731
- GB-A- 2 348 259
- US-A- 4 164 954
- US-A- 5 070 983

## Beschreibung

Die vorliegende Erfindung betrifft einen hydraulischen Druckspeicher mit mindestens einer, mit einem Hydraulikkreis in Fluidverbindung stehender Druckkammer, die zwischen einer in einem Gehäuse angeordneten beweglichen und einer feststehenden Trennwand gebildet ist und einem Druckbegrenzungsventil.

Ein hydraulischer Kreislauf wird in vielen Anwendungsfällen, beispielsweise zur Auslösung von Steuerimpulsen, eingesetzt oder auch um beispielsweise durch die Beaufschlagung einer Kolben-/Zylindereinheit eine Betätigungskraft zu erzeugen.

So kann beispielsweise eine automatisiert betätigte Kupplung mittels eines hydraulischen Aktuators betätigt werden, oder ein solcher Hydraulikkreis auch zur Verstellung des Übersetzungsverhältnisses zwischen den beiden Kegelscheibenpaaren eines Kegelscheibenumschlingungsgetriebes eingesetzt werden. Wenn eine solche Betätigungskraft sehr schnell aufgebaut werden muss, kann der Anlaufvorgang eines Elektromotors einer elektromotorischen Hydraulikpumpe schon dazu führen, dass die für den Anlaufvorgang des Elektromotors erforderliche Zeitdauer zu groß ist. Es ist daher erforderlich, ein bestimmtes Volumen an Druckfluid unter einem vorbestimmten Druck auf Vorrat zu halten, damit mit diesem Druckfluid die geforderte Betätigungskraft in der geforderten Zeitspanne aufgebaut werden kann.

Zur Bereithaltung dieses Volumens an Druckfluid mit dem vorbestimmten Druckniveau können nun hydraulische Druckspeicher in der Form beispielsweise eines Membranspeichers eingesetzt werden. Dieser weist aber den Nachteil auf, dass einerseits die Membran nicht vollständig druckdicht ist und andererseits Ermüdungserscheinungen unterliegt, sodass die von dem Druckspeicher geforderte Standzeit mit dem Membranspeicher nicht eingehalten werden kann.

Als weitere Möglichkeit eines solchen Druckspeichers steht der Kolbendruckspeicher mit einer Schraubenfeder zur Verfügung, mit dem die gewünschte Menge an Druckfluid mit dem vorbestimmten Druckniveau bereitgehalten werden kann. Ein solcher Kolbendruckspeicher weist einen in einem Zylinder axial bewegbaren Druckkolben auf, mit dem das Druckfluid auf dem gewünschten Druckniveau gehalten werden kann. Mit steigendem Druckniveau nehmen aber auch die Dichtigkeitsprobleme zwischen dem Druckkolben und der Zylinderwand zu, sodass es erforderlich ist, die Passung zwischen dem Druckkolben und dem Zylinder hochgenau zu fertigen, was zu hohen Herstellungskosten führt. Bei den Kolbendruckspeichern besteht zudem die Notwendigkeit, dass ein Verkippen bzw. Verkanten des Kolbens in der Zylinderbohrung vermieden werden muss und somit der Kolben eine gewisse Führungslänge aufweisen muss, um gut abdichten zu können.

Dasselbe Problem ergibt sich auch bei einem gegen Gasdruck arbeitenden Kolbendruckspeicher, bei dem lediglich die Schraubenfeder gegen ein Gasreservoir ersetzt worden ist.

Aus der Patentschrift US 4,164,954 ist ein Tellerfederdruckspeicher bekannt, dessen Druckkammer von einer feststehenden Trennwand und einer aus einer Tellerfeder bestehenden beweglichen Trennwand gebildet wird. Die feststehende Trennwand ist dabei als Steuerplatte mit Kanälen zur Fluidverbindung der Druckkammer mit einem Hydraulikkreis ausgebildet.

Ausgehend hiervon liegt der vorliegenden Erfindung nunmehr die Aufgabe zugrunde, einen weiteren hydraulischen Druckspeicher mit Tellerfeder zu schaffen, der einerseits kostengünstig hergestellt werden kann, andererseits das Problem des Undichtwerdens der Druckkammer beseitigt und zudem auch bei vielen Lastwechselspielen wenig Verschleiß besitzt und sich somit mit einer hohen Standzeit auszeichnet.

Die Erfindung löst diese Aufgabe mit einem hydraulischen Druckspeicher mit den Merkmalen des Anspruchs 1.

Vorteilhafte Ausgestaltungen hiervon in den weiteren Ansprüchen beschrieben.

Durch den Einsatz der Tellerfeder als bewegliche Trennwand wird das Problem des Undichtwerdens der Membran bei einem Membrandruckspeicher beseitigt. Auch fällt die Ausbildung des Druckkolbens mit einer bestimmten Länge zur Vermeidung des Problems des Verkippens des Kolbens in der Zylinderbohrung weg. Darüber hinaus ist der mit der Tellerfeder ausgestattete Druckspeicher auch bei sehr hohem Druckniveau des in der Druckkammer gespeicherten Fluids druckdicht, da eine Ausbildung möglich ist, mit der mit steigendem Innendruck in der Druckkammer die Tellerfeder immer mehr gegen Dichtungselemente gedrückt wird oder auch eine Ausbildung derart, dass mit steigendem Innendruck Dichtungselemente immer stärker gegen die Tellerfeder gedrückt werden, sodass eine vollständig fluiddichte Druckkammer erreicht werden kann und sich hieran auch bei vielen Lastwechselspielen der Tellerfeder als beweglicher Trennwand der Druckkammer nichts ändert.

Es ist dabei nach der Erfindung vorgesehen, dass die Tellerfeder einen ringscheibenförmigen Tellerfederkörper besitzt und zwar mit einer Mittenöffnung, die mittels eines die Druckkammer nach außen abschließenden Innendeckels verschlossen ist. Diese Ausbildung ermöglicht den Einsatz einer bekannten Tellerfeder, bei der lediglich Ihre Mittenöffnung mit dem Innendeckel verschlossen werden muss. Es ist dabei eine solche Anordnung möglich, dass der Innendeckel unter Zwischenlage eines Dichtelements in der Form beispielsweise eines Elastomerkörpers gegen den Tellerfederkörper gedrückt wird, sodass eine definierte Druckkraft zwischen dem Innendeckel und dem Tellerfederkörper im Bereich des Dichtungselements aufgebaut werden kann.

Um einen, ein vorbestimmtes Druckniveau in der Druckkammer überschreitenden Innendruck zu vermeiden, ist ein bei einem vorbestimmten Schwellenwert öffnendes Druckbegrenzungsventil in der Druckkammer vorgesehen, welches nach einer Weiterbildung der Erfindung in einer Durchgangsöffnung des Innendeckels angeordnet werden kann.

Es kann dabei nach der Erfindung vorgesehen sein, dass die feststehende Trennwand von einer Steuerplatte mit vorbestimmten Kanälen zur Fluidverbindung der Druckkammer mit dem Hydraulikkreis gebildet ist und dass an einer Flanschfläche der Steuerplatte ein Flanschring zur lösbaren Festlegung der Tellerfeder festlegbar ist. Über die vorbestimmten Kanäle in der Steuerplatte kann Druckfluid in die Druckkammer verbracht und aus dieser wieder entspannt werden, sodass die Druckkammer über die Steuerplatte mit dem Hydraulikkreis in Fluidverbindung steht, wobei eine Funktionsintegration dadurch erreicht werden kann, dass die Steuerplatte eine Flanschfläche besitzt, an der ein Flanschring zur lösbaren Festlegung der Tellerfeder festgelegt werden kann. Zur Montage des hydraulischen Druckspeichers nach der Erfindung muss daher lediglich die Tellerfeder in beispielsweise eine in der Steuerplatte vorgesehene Ausnehmung eingesetzt werden und sodann mittels des Flanschrings gegen die Flanschfläche der Steuerplatte unter Zwischenschaltung eines Dichtungselements, das die Druckkammer nach außen abdichtet, verschraubt werden.

Durch diese Anordnung ist auch ein bei Druckspeichern zu beobachtendes Problem beseitigt, nämlich dass sich mit steigendem Innendruck in der Druckkammer eine die Druckkammer nach außen abschließende Abdeckplatte nach außen verwölbt, da diese Abdeckplatte nur mehr die Form eines Flanschringes besitzt und sich der die Druckkammer nach außen abschließende ringscheibenförmige Tellerfederkörper relativ zur feststehenden Trennwand ohnehin geringfügig bewegt.

Diese Relativbewegung des ringscheibenförmigen Tellerfederkörpers relativ zur feststehenden Trennwand führt aufgrund des Kegelwinkels der Tellerfeder auch zu einer radialen Bewegungskomponente des radial außen liegenden Bereiches des Tellerfederkörpers.

Um nun zu vermeiden, dass der radial außen liegende Bereich der Tellerfeder bei dieser Radialbewegung zu einer spanabhebenden Bewegung an dem Flanschring führt, ist es nach der Erfindung vorgesehen, dass der Flanschring an der der Druckkammer zugewandten Seite einen querschnittlich U-förmigen Bereich aufweist und dass zwischen der Tellerfeder und dem U-förmigen Bereich ein Drahtring angeordnet ist, an dem der radial außen liegende Bereich der Tellerfeder eine radiale Bewegung relativ zum Flanschring ausführen kann.

Dieser Drahtring sorgt nun dafür, dass die Tellerfeder an ihrem radial außen liegenden Auflagebereich an dem Drahtring eine Gleitbewegung ausführen kann und dieser in geringem Maße auf seiner Auflagefläche, also dem querschnittlich U-förmigen Bereich des Flanschrings abrollen kann. Damit wird durch die Zwischenschaltung diese Drahtrings ein Übergang der radial außen liegenden Auflagefläche der Tellerfeder von einem Haftreibungszustand zu einem Gleitreibungszustand an dem Flanschring vermieden, der zu einer spanabhebenden Bewegung am Flanschring führen würde und damit zu einem vorzeitigen Verschleiß. Damit wird erreicht, dass der erfindungsgemäße Druckspeicher auch bei vielen Lastwechselspielen wenig Verschleiß besitzt und somit sich durch eine hohe Standzeit auszeichnet.

In ähnlicher Weise ist nach einer Weiterbildung der Erfindung vorgesehen, dass der Innendeckel an dem der Tellerfeder zugewandten Bereich querschnittlich U-förmig ausgebildet ist und zwischen der Tellerfeder und dem U-förmigen Bereich ein Drahtring angeordnet ist, an dem der radial innen liegende Bereich der Tellerfeder eine radiale Bewegung relativ zum Innendeckel ausführt. Auch an dieser Stelle wird daher durch den Drahtring das Problem des Verschleißes des Innendeckels und/oder des Tellerfederkörpers im Kontaktbereich zwischen dem Tellerfederkörper und dem Innendeckel vermieden.

Wie es vorstehend bereits erwähnt wurde, sind zwischen der Druckkammer und dem Außenbereich Dichtungselemente vorgesehen, wobei diese zwischen dem Innendeckel und der Tellerfeder sowie der Tellerfeder und der Steuerplatte angeordnet sein können. Diese Dichtungselemente in der Form beispielsweise ringförmiger Elastomerkörper werden daher durch den Innendruck in der Druckkammer gegen den Innendeckel und die Tellerfeder sowie die Steuerplatte gedrückt und schließen die Druckkammer hermetisch fluiddicht nach außen ab.

Nach einer Weiterbildung der Erfindung kann das vorstehend bereits erwähnte Druckbegrenzungsventil einen Ventilkörper besitzen mit einer insbesondere kegelmantelflächenförmigen Dichtfläche zwischen dem Ventilkörper und dem Innendeckel, wobei der Ventilkörper eine Durchgangsbohrung aufweisen kann zur Aufnahme eines Schaftes eines Schraubenbolzens.

Das Außengewinde des Schraubenbolzens kann dabei mit einem in der Durchgangsbohrung des Ventilkörpers vorgesehenen Innengewindes im Eingriff stehen, sodass der Schraubbolzen über den Ventilkörper hervorsteht und mittels einer eine Sackgewindebohrung aufweisenden Mutter gekontert werden kann und dabei an einem am Schraubenbolzenschaft vorgesehenen Absatz anliegt. Durch das Kontern der Mutter am Außengewinde des Schraubbolzens wird zwischen dem Ventilkörper und der Mutter eine Dichtfläche geschaffen, die ein unkontrolliertes Entweichen von Druckfluid aus der Druckkammer in die Umgebung vermeidet.

Der vorstehend beschriebene Schraubenbolzen kann sich dabei in eine Bohrung der Steuerplatte erstrecken, sodass Bauteile des Druckbegrenzungsventils in dieser Bohrung aufgenommen werden. Es ist dabei nach einer Weiterbildung der Erfindung vorgesehen, dass in der Bohrung ein Absatz ausgebildet ist, an dem ein Kopf des Schraubenbolzens zur Anlage kommt derart, dass der Schraubenbolzen bei Überschreiten eines vorbestimmten Schwellendrucks in der Druckkammer den Kontakt des Ventilkörpers mit dem Innendeckel löst und somit ein Überschreiten des Schwellendrucks in der Druckkammer vermieden wird, da durch das Lösen des körperlichen Kontakts des Ventilkörpers vom Innendruck Druckfluid aus der Druckkammer nach außen entweichen kann.

Der in der Druckkammer herrschende Druck führt als ungerichtete Größe zu einer Druckbeaufschlagung der feststehenden Trennwand in der Form der Steuerplatte. Um nun diese Druckbelastung auszugleichen und darüber hinaus das Volumen an zur Verfügung stehendem Druckfluid zu vergrößern, ist es nach der Erfindung vorgesehen, dass der hydraulische Druckspeicher zwei Druckkammern besitzt, wobei zwei Druckspeicher - wie sie vorstehend beschrieben worden sind - mit einander benachbarter feststehender Trennwand und nur einer Fluidverbindung zum Hydraulikkreis verbunden sind derart, dass sich die auf die jeweilige Trennwand ausgeübten Druckkräfte an der Trennwandkontaktebene aufheben. Es bedeutet dies mit anderen Worten, dass zwei hydraulische Druckspeicher zu einer Einheit gekoppelt so mit einander verbunden werden, dass die beiden feststehenden Trennwände aneinander zu liegen kommen und somit sich die an der Trennwandkontaktebene herrschenden Druckkräfte nach dem Superpositionsprinzip auslöschen.

Bei den vorstehend genannten feststehenden Trennwänden kann es sich um vorbestimmte Kanäle aufweisende Steuerplatten handeln. Nach einer Weiterbildung der Erfindung ist es daher vorgesehen, dass zwischen den feststehenden Trennwänden ein Zwischenblech angeordnet ist, welches Bohrungen zur Fluidverbindung vorbestimmter Kanäle der Steuerplatten besitzt, sodass das Druckfluid in die beiden Druckkammern über nur einen an einer Steuerplatte vorgesehenen Flanschanschluss mit dem Hydraulikkreis verbunden ist und das Hydraulikfluid über diesen Anschluss und die Steuerplatten sowie die Bohrungen in dem Zwischenblech in beide Druckkammern gelangen kann und auch aus diesen entspannt werden kann.

Nach einer Weiterbildung der Erfindung ist dabei vorgesehen, dass die Steuerplatten mittels die Flanschflächen und die Flanschringe durchsetzender Schraubbolzen verbunden werden. Durch diese Anordnung wird eine durch Innendruck bedingte Durchbiegung der Steuerplatten vermieden und durch die beide Steuerplatten durchsetzenden Schraubbolzen wird erreicht, dass die Zahl der Schraubbolzen verglichen mit einem hydraulischen Druckspeicher mit nur einer Druckkammer nicht ansteigt, da beide Tellerfedern und beide Flanschringe mit den Schraubbolzen gegen die jeweiligen Steuerplatten verspannt werden können. Zudem wird durch diese Anordnung der Vorteil erreicht, dass die Steuerplatten keiner Biegebeanspruchung unterliegen, da sich die Schrauben nicht an Ihnen abstützen und auch in die Steuerplatten keine Kerbspannungen und Kosten verursachenden Innengewinde gesetzt werden müssen.

Die Erfindung wird im Folgenden anhand der Zeichnung näher erläutert. Diese zeigt in:
- Fig. 1: eine Draufsichtansicht auf eine Ausführungsform eines Druckspeichers nach der vorliegenden Erfindung;
- Fig. 2: einen Schnitt entlang der Linie A-A nach Fig. 1; und
- Fig. 3: einen Ausschnitt gemäß der Einzelheiten B nach Fig. 2.

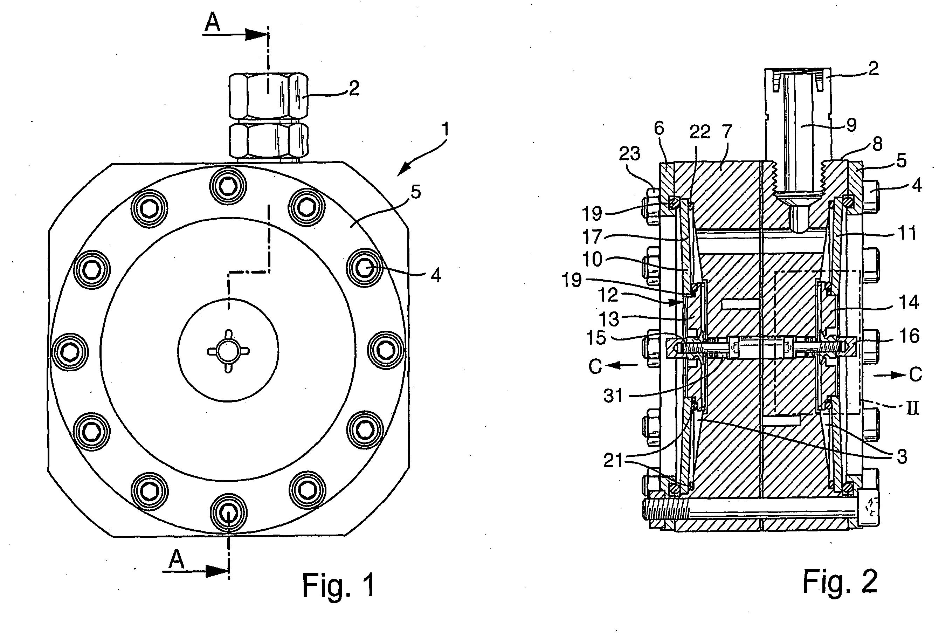

Wie es ohne weiteres anhand von Fig. 1 der Zeichnung ersichtlich ist, weist der hydraulische Druckspeicher 1 nach der dargestellten Ausführungsform eine weitgehend quadratische Konfiguration auf mit abgerundeten Ecken, wobei es sich hierbei nur um ein Beispiel eines solchen Druckspeichers handelt.

Über den Anschluss 2 kann der Druckspeicher 1 in einen Hydraulikkreis eingebunden werden, sodass das Druckfluid über den Anschluss 2 in die näher anhand von Fig. 2 ersichtlichen Druckkammern 3 eingebracht werden kann und über den Anschluss 2 auch wieder aus den Druckräumen entspannt werden kann. Fig. 1 zeigt darüber hinaus eine Zahl von äquidistant beabstandeten Schraubbolzen 4, mit denen über den Flanschring 5, 6 die beiden feststehenden Trennwände in der Form der Steuerplatten 7, 8 (bei der in der Zeichnung dargestellten Ausführungsform des hydraulischen Druckspeichers handelt es sich um eine Ausführungsform mit zwei Druckkammern 3) miteinander verschraubt werden können.

Der Anschluss 2 weist einen Kanal 9 auf zur Versorgung der Druckkammern 3 mit Fluid. Wie es anhand von Fig. 2 ohne weiteres ersichtlich ist, führt der Kanal 9 in beide mit den Bezugszeichen 3 bezeichneten Druckräume oberhalb der Steuerplatte 7 bzw. oberhalb der Steuerplatte 8. Die beiden Druckkammern 3 werden einerseits von der Steuerplatte 7 bzw. der Steuerplatte 8 und anderseits der Tellerfeder 10 bzw. 11 begrenzt. Eine Mittenöffnung 12 der beiden Tellerfedern 10, 11 ist jeweils von einem Innendeckel 13, 14 verschlossen, in dem jeweils ein Druckbegrenzungsventil 15, 16 angeordnet ist.

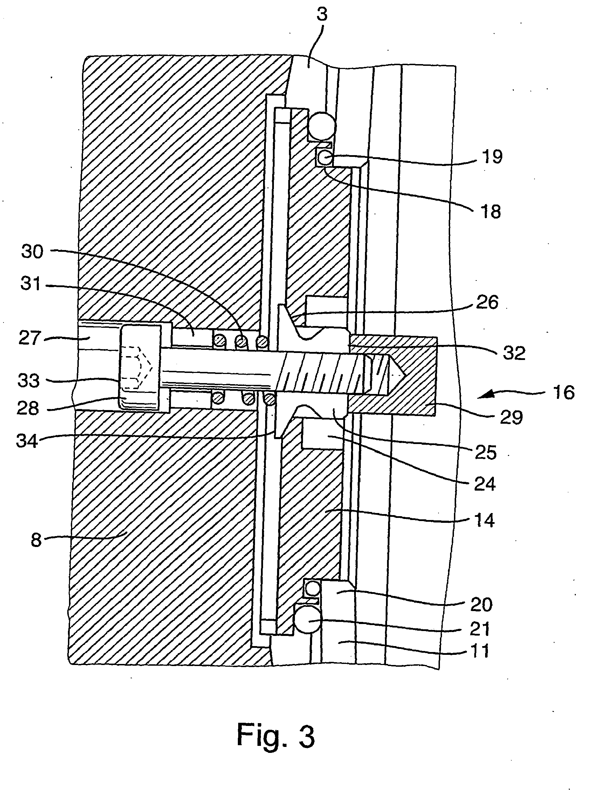

Die Tellerfeder 10 liegt dabei mit ihrem radial innen liegenden Bereich des Tellerfederkörpers 17 an einem in einer U-förmigen Nut 18 (siehe Fig. 3) angeordneten Drahtring 19 auf, sodass diese radial innen liegende Auflagefläche 20 des Tellerfederkörpers 17 eine radiale Verlagerungsbewegung an dem Drahtring 19 ausführen kann. Wie es näher anhand von Fig. 3 der Zeichnung ersichtlich ist, befindet sich zwischen dem Innendeckel 13 und dem Tellerfederkörper 17 ein Dichtungselement 21 in der Form einer querschnittlich kreisförmigen Elastomerdichtung angeordnet.

In ähnlicher Weise befindet sich ein Drahtring 19 am radial außen liegenden Bereich der Tellerfeder 10, 11 in einer U-förmigen Nut des Flanschrings 5, 6 angeordnet, sodass der radial außen liegende Bereich des Tellerfederkörpers 17 an dieser Stelle eine radiale Relativbewegung ausführen kann.

Ein Dichtungselement 22 in der Form einer querschnittlich kreisförmigen Elastomerdichtung dichtet die Druckkammern 3 im radial außen liegenden Bereich ab. Wird nun über den Anschluss 2 ein Druckfluid in die Druckkammern 3 gebracht und dort unter Druck gesetzt, so führt dies zu einer Druckbeaufschlagung der Tellerfeder 10,11, sodass diese bezüglich der Steuerplatten 7, 8 eine Relativbewegung in Richtung der Pfeile "C" ausführen. Wenn nun das in den Druckkammern unter Druck vorliegende Hydraulikfluid entspannt werden soll, beispielsweise zur kurzzeitigen Druckerhöhung des Betriebsdrucks im Hydraulikkreis, so kann der Anschluss 2 über ein nicht dargestelltes Ventil geöffnet werden und das Druckfluid in den Druckkammern 3 den Hydraulikkreis beaufschlagen. Dabei führen die Tellerfedern 10, 11 eine Bewegung entgegen der Richtung der Pfeile "C" aus.

Mittels der Schraubbolzen 4 und der Muttern 23 werden die beiden Steuerplatten 7, 8 so aneinander festgelegt, dass sie bei Druckaufbau in den Druckkammern 3 nicht auf Biegung belastet werden.

Nachfolgend wird nun anhand von der in Fig. 3 dargestellten Einzelheit B aus Fig. 2 der Aufbau und die Funktionsweise des Druckbegrenzungsventils 16 (das Druckbegrenzungsventil 15 weist einen analogen Aufbau und eine analoge Wirkungsweise auf) erläutert.

Das Druckbegrenzungsventil 16 durchsetzt eine Durchgangsöffnung 24 des Innendeckels 14, wobei sich ein Ventilkörper 25 im Bereich der Durchgangsöffnung 24 angeordnet befindet.

Der Ventilkörper 25 weist eine kegelmantelflächenförmige Dichtfläche 26 auf, die mit einer entsprechend abgeschrägten Fläche des Innendeckels im Bereich der Durchgangsöffnung 24 zusammen wirkt. Das Druckbegrenzungsventil 16 setzt sich dabei aus einem in einer Bohrung 27 der Steuerplatte 8 angeordneten Schraubbolzen 28, dem Ventilkörper 25 und einer eine Sackbohrung aufweisenden Mutter 29 zusammen und wird über eine Druckfeder 30 im unbelasteten Zustand der Druckkammer 3 in einer geschlossenen Stellung gehalten, wobei sich die Druckfeder 30 an einem in der Bohrung 8 ausgebildeten Absatz 31 abstützt. Zwischen der Mutter 29 und dem Ventilkörper 25 befindet sich eine Dichtfläche 32 ausgebildet, über die Druckfluid aus der Druckkammer nicht entweichen kann, da durch das Verschrauben der Mutter 29 und des Ventilkörpers 25 an dem Gewinde des Schraubbolzens 28 zwischen der Oberseite des Ventilkörpers 25 und der Unterseite der Mutter 29 eine die Dichtfläche 32 beaufschlagende Druckkraft aufgebaut wird, die diese abdichtet.

Steigt nun der Druck in der Druckkammer 3 an, so führt die Tellerfeder 11 eine Bewegung in Richtung des Pfeils "C" (siehe Fig. 2) aus und nimmt den Innendeckel 14 sowie das Druckbegrenzungsventil 16 mit. Steigt nun der Druck in der Druckkammer 3 über einen vorbestimmten Schwellenwert an, so gelangt der Kopf 33 des Schraubbolzens 28 mit dem Absatz 31 in Kontakt und zieht den Ventilkörper 25 aus dem dichtenden Kontakt an der Dichtfläche 26 mit dem Innendeckel 14 heraus, sodass sich ein Spaltraum öffnet und Druckfluid über die Durchgangsöffnung 24 entweichen kann, bis der Innendruck in der Druckkammer 3 soweit abgesunken ist, dass die Tellerfeder 11 eine Bewegung entgegengesetzt des Pfeils "C" nach Fig. 2 ausführt und der Ventilkörper über seine Stirnfläche 34 vom Druckfluid in der Druckkammer 3 beaufschlagt wieder einen dichtenden Kontakt mit dem Innendeckel 14 einnimmt.

Der erfindungsgemäße hydraulische Druckspeicher zeichnet sich nun dadurch aus, dass das Problem einer undichten Membran wirkungsvoll beseitigt wurde und auch eine hohe Lastwechselzahl an den Tellerfedern 10, 11 nicht zu einem Undichtwerden der Druckkammern 3 führt und kostenaufwendige mechanische Herstellungsschritte, wie dies beispielsweise bei der passgenauen Anfertigung von Kolben-/Zylindereinheiten bei Kolbendruckspeichern notwendig ist, in Wegfall geraten.

Hinsichtlich vorstehend im Einzelnen nicht näher erläuterter Merkmale wird im Übrigen ausdrücklich auf die Ansprüche und Zeichnung verwiesen.

### Bezugszeichenliste

- 1: Druckspeicher
- 2: Anschluss
- 3: Druckkammer
- 4: Schraubbolzen
- 5: Flanschring
- 6: Flanschring
- 7: Steuerplatte
- 8: Steuerplatte
- 9: Kanal
- 10: Tellerfeder
- 11: Tellerfeder
- 12: Mittenöffnung
- 13: Innendeckel
- 14: Innendeckel
- 15: Druckbegrenzungsventil
- 16: Druckbegrenzungsventil
- 17: Tellerfederkörper
- 18: Nut
- 19: Drahtring
- 20: Auflagefläche
- 21: Dichtungselement
- 22: Dichtungselement
- 23: Mutter
- 24: Durchgangsöffnung
- 25: Ventilkörper
- 26: Dichtfläche
- 27: Bohrung
- 28: Schraubbolzen
- 29: Mutter
- 30: Druckfeder
- 31: Absatz
- 32: Dichtfläche
- 33: Kopf
- 34: Stirnfläche

## Patentansprüche

1. Hydraulischer Druckspeicher mit mindestens einer, mit einem Hydraulikkreis in Fluidverbindung stehender Druckkammer (3), die zwischen einer in einem Gehäuse angeordneten beweglichen (10, 11) und einer feststehenden (7, 8) Trennwand gebildet ist und einem Druckbegrenzungsventil (15, 16), wobei die bewegliche Trennwand von einer Tellerfeder (10, 11) und die feststehende Trennwand (7, 8) von einer Steuerplatte (7, 8) mit vorbestimmten Kanälen zur Fluidverbindung der Druckkammer (3) mit dem Hydraulikkreis gebildet ist, wobei an einer Flanschfläche der Steuerplatte (7, 8) ein Flanschring (5, 6) zur lösbaren Festlegung der Tellerfeder (10, 11) festlegbar ist, **dadurch gekennzeichnet, dass** der Flanschring (5, 6) an der der Druckkammer (3) zugewandten Seite einen querschnittlich U-förmigen Bereich aufweist und dass zwischen der Tellerfeder (10, 11) und dem U-förmigen Bereich ein Drahtring (19) angeordnet ist, an dem der radial außen liegende Bereich der Tellerfeder (10, 11) eine radiale Bewegung relativ zum Flanschring (5, 6) ausführt.

2. Hydraulischer Druckspeicher nach Anspruch 1, **dadurch gekennzeichnet, dass** die Tellerfeder (10, 11) einen ringscheibenförmigen Tellerfederkörper (17) mit einer Mittenöffnung besitzt, die mittels eines die Druckkammer (3) nach außen abschließenden Innendeckels (13, 14) verschlossen ist.

3. Hydraulischer Druckspeicher nach Anspruch 2, **dadurch gekennzeichnet, dass** der Innendeckel (13, 14) eine Durchgangsöffnung (24) aufweist, in der das Druckbegrenzungsventil (15, 16) angeordnet ist.

4. Hydraulischer Druckspeicher nach einem der Ansprüche 2 bis 3, **dadurch gekennzeichnet, dass** der Innendeckel (13, 14) an dem der Tellerfeder (10, 11) zugewandten Bereich querschnittlich U-förmig ausgebildet ist und zwischen der Tellerfeder (10, 11) und dem U-förmigen Bereich ein Drahtring (19) angeordnet ist, an dem der radial innen liegende Bereich der Tellerfeder (10, 11) eine radiale Bewegung relativ zum Innendeckel (13, 14) ausführt.

5. Hydraulischer Druckspeicher nach einem der Ansprüche 2 oder 4, **dadurch gekennzeichnet, dass** zwischen dem Innendeckel (13, 14) und der Tellerfeder (10, 11) sowie der Tellerfeder (10, 11) und der Steuerplatte (7, 8) jeweils ein Dichtungselement (21) angeordnet ist.

6. Hydraulischer Druckspeicher nach einem der Ansprüche 3 bis 5, **dadurch gekennzeichnet, dass** das Druckbegrenzungsventil (15, 16) einen Ventilkörper (25) mit einer insbesondere kegelmantelflächenförmigen Dichtfläche (26) zwischen Ventilkörper (25) und Innendeckel (13, 14) besitzt und der Ventilkörper (25) eine Durchgangsbohrung zur Aufnahme eines Schaftes eines Schraubenbolzens (28) aufweist.

7. Hydraulischer Druckspeicher nach Anspruch 6, **dadurch gekennzeichnet, dass** der Schraubenbolzen einen Absatz besitzt, an dem der Ventilkörper (25) aufliegt und der Ventilkörper (25) mittels einer Mutter (29) am Absatz festlegbar ist, wobei zwischen der Mutter (29) und dem Ventilkörper (25) eine Dichtfläche (32) ausgebildet ist.

8. Hydraulischer Druckspeicher nach einem der vorstehenden Ansprüche, **dadurch gekennzeichnet, dass** die Steuerplatte (7, 8) eine Bohrung (27) aufweist zur Aufnahme von Bauteilen des Druckbegrenzungsventils (15,16).

9. Hydraulischer Druckspeicher nach Anspruch 8, **dadurch gekennzeichnet, dass** in der Bohrung (27) ein Absatz (31) ausgebildet ist, an den ein Kopf (33) des Schraubenbolzens (28) zur Anlage kommt derart, dass der Schraubenbolzen (28) bei Überschreiten eines vorbestimmten Schwellendrucks in der Druckkammer (3) den Kontakt des Ventilkörpers (26) mit dem Innendeckel (13, 14) löst.

10. Hydraulischer Druckspeicher mit zwei Druckkammern (3), wobei zwei Druckspeicher (1) nach einem der vorstehenden Ansprüche mit einander benachbarter feststehender Trennwand (7, 8) und nur einer Fluidverbindung zum Hydraulikkreis verbunden sind derart, dass sich die auf die jeweilige Trennwand (7, 8) ausgeübten Druckkräfte an der Trennwandkontaktebene aufheben.

11. Hydraulischer Druckspeicher nach Anspruch 10, **dadurch gekennzeichnet, dass** zwischen den feststehenden Trennwänden (7, 8) ein Zwischenblech angeordnet ist, welches Bohrungen zur Fluidverbindung vorbestimmter Kanäle der Steuerplatten (7, 8) besitzt.

12. Hydraulischer Druckspeicher nach Anspruch 10 oder 11, **dadurch gekennzeichnet, dass** die Steuerplatten (7, 8) mittels die Flanschflächen und die Flanschringe (5, 6) durchsetzender Schraubbolzen (4) verbunden sind.

## Claims

1. Hydraulic pressure accumulator with at least one pressure chamber (3) which is fluid-connected to a hydraulic circuit and which is formed between a movable partition (10, 11) arranged in a housing and a fixed partition (7, 8), and with a pressure-limiting valve (15, 16), the movable partition being formed by a cup spring (10, 11) and the fixed partition (7, 8) being formed by a control plate (7, 8) with predetermined ducts for the fluid connection of the pressure chamber (3) to the hydraulic circuit, a flange ring (5, 6) for releasably securing the cup spring (10, 11) being securable to a flange face of the control plate (7, 8), **characterized in that** the flange ring (5, 6) has a region of U-shaped cross section on the side facing the pressure chamber (3), and **in that**, between the cup spring (10, 11) and the U-shaped region, a wire ring (19) is arranged, on which the radially outer region of the cup spring (10, 11) executes a radial movement in relation to the flange ring (5, 6).

2. Hydraulic pressure accumulator according to Claim 1, **characterized in that** the cup spring (10, 11) possesses a cup-spring body (17) in the form of an annular disc, with a centre orifice which is closed by means of an inner cover (13, 14) closing off the pressure chamber (3) outwardly.

3. Hydraulic pressure accumulator according to Claim 2, **characterized in that** the inner cover (13, 14) has a passage orifice (24) in which the pressure-limiting valve (15, 16) is arranged.

4. Hydraulic pressure accumulator according to either one of Claims 2 and 3, **characterized in that** the inner cover (13, 14) is designed with a U-shaped cross section on the region facing the cup spring (10, 11), and, between the cup spring (10, 11) and the U-shaped region, a wire ring (19) is arranged, at which the radially inner region of the cup spring (10, 11) executes a radial movement in relation to the inner cover (13, 14).

5. Hydraulic pressure accumulator according to either one of Claims 2 and 4, **characterized in that** a sealing element (21) is arranged in each case between the inner cover (13, 14) and the cup spring (10, 11) and between the cup spring (10, 11) and the control plate (7, 8).

6. Hydraulic pressure accumulator according to one of Claims 3 to 5, **characterized in that** the pressure-limiting valve (15, 16) possesses a valve body (25) with a sealing surface (26) particularly in the form of the surface area of a cone, between the valve body (25) and inner cover (13, 14), and the valve body (25) has a passage bore for receiving a shank of a screw bolt (28).

7. Hydraulic pressure accumulator according to Claim 6, **characterized in that** the screw bolt possesses a shoulder, against which the valve body (25) lies, and the valve body (25) can be secured to the shoulder by means of a nut (29), a sealing surface (32) being formed between the nut (29) and the valve body (25).

8. Hydraulic pressure accumulator according to one of the preceding claims, **characterized in that** the control plate (7, 8) has a bore (27) for the reception of components of the pressure-limiting valve (15, 16).

9. Hydraulic pressure accumulator according to Claim 8, **characterized in that**, in the bore (27), a shoulder (31) is formed, against which a head (33) of the screw bolt (28) comes to bear in such a way that, when a predetermined threshold pressure in the pressure chamber (3) is overshot, the screw bolt (28) breaks the contact of the valve body (26) with the inner cover (13, 14).

10. Hydraulic pressure accumulator with two pressure chambers (3), two pressure accumulators (1) according to one of the preceding claims, with mutually adjacent fixed partitions (7, 8) and with only one fluid connection to the hydraulic circuit, being connected in such a way that the pressure forces exerted on the respective partition (7, 8) cancel one another out at the partition contact plane.

11. Hydraulic pressure accumulator according to Claim 10, **characterized in that**, between the fixed partitions (7, 8), an intermediate plate is arranged which possesses bores for the fluid connection of predetermined ducts of the control plates (7, 8).

12. Hydraulic pressure accumulator according to Claim 10 or 11, **characterized in that** the control plates (7, 8) are connected by means of screw bolts (4) passing through the flange faces and the flange rings (5, 6).

## Revendications

1. Accumulateur de pression hydraulique avec au moins une chambre de pression (3) se trouvant en communication fluide avec un circuit hydraulique, qui est formée entre une paroi de séparation mobile (10, 11) disposée dans un boîtier et une paroi de séparation fixe (7, 8), et avec une soupape de limitation de pression (15, 16), dans lequel la paroi de séparation mobile est formée par une rondelle élastique (10, 11) et la paroi de séparation fixe (7, 8) est formée par une plaque de commande (7, 8) avec des canaux prédéterminés pour la communication fluide de la chambre de pression (3) avec le circuit hydraulique, dans lequel un collet rapporté (5, 6) peut être fixé à une face de bride de la plaque de commande (7, 8) pour la fixation démontable de la rondelle élastique (10, 11), **caractérisé en ce que** le collet rapporté (5, 6) présente une zone de section transversale en forme de U sur le côté tourné vers la chambre de pression (3) et **en ce qu'**une bague filaire (19) est disposée entre la rondelle élastique (10, 11) et la zone en forme de U, sur laquelle la zone radialement extérieure de la rondelle élastique (10, 11) effectue un mouvement radial par rapport au collet rapporté (5, 6).

2. Accumulateur de pression hydraulique selon la revendication 1, **caractérisé en ce que** la rondelle élastique (10, 11) comprend un corps de rondelle élastique en forme de rondelle annulaire (17) avec une ouverture centrale, qui est obturée au moyen d'un couvercle intérieur (13, 14) fermant la chambre de pression (3) vers l'extérieur.

3. Accumulateur de pression hydraulique selon la revendication 2, **caractérisé en ce que** le couvercle intérieur (13, 14) présente une ouverture de passage (24), dans laquelle la soupape de limitation de pression (15, 16) est disposée.

4. Accumulateur de pression hydraulique selon l'une quelconque des revendications 2 à 3, **caractérisé en ce que** le couvercle intérieur (13, 14) est réalisé avec une section transversale en forme de U sur la zone tournée vers la rondelle élastique (10, 11) et une bague filaire (19) est disposée entre la rondelle élastique (10, 11) et la zone en forme de U, sur laquelle la zone radialement extérieure de la rondelle élastique (10, 11) effectue un mouvement radial par rapport au couvercle intérieur (13, 14).

5. Accumulateur de pression hydraulique selon l'une quelconque des revendications 2 ou 4, **caractérisé en ce qu'**un élément d'étanchéité (21) est à chaque fois disposé entre le couvercle intérieur (13, 14) et la rondelle élastique (10, 11), ainsi qu'entre la rondelle élastique (10, 11) et la plaque de commande (7, 8).

6. Accumulateur de pression hydraulique selon l'une quelconque des revendications 3 à 5, **caractérisé en ce que** la soupape de limitation de pression (15, 16) comporte un corps de soupape (25) avec une face d'étanchéité (26) en particulier de forme latérale conique entre le corps de soupape (25) et le couvercle intérieur (13, 14) et le corps de soupape (25) présente une ouverture de passage destinée à recevoir une tige d'un boulon fileté (28).

7. Accumulateur de pression hydraulique selon la revendication 6, **caractérisé en ce que** le boulon fileté présente un épaulement, sur lequel le corps de soupape (25) est appliqué, et le corps de soupape (25) peut être fixé sur l'épaulement à l'aide d'un écrou (29), dans lequel une face d'étanchéité (32) est formée entre l'écrou (29) et le corps de soupape (25).

8. Accumulateur de pression hydraulique selon l'une quelconque des revendications précédentes, **caractérisé en ce que** la plaque de commande (7, 8) présente un alésage (27) destiné à recevoir des composants de la soupape de limitation de pression (15, 16).

9. Accumulateur de pression hydraulique selon la revendication 8, **caractérisé en ce qu'**un épaulement (31) est formé dans l'alésage (27), sur lequel une tête (33) du boulon fileté (28) vient s'appliquer, de telle manière que le boulon fileté (28) rompe le contact entre le corps de soupape (26) et le couvercle intérieur (13, 14) en cas de dépassement d'une pression de seuil prédéterminée dans la chambre de pression (3).

10. Accumulateur de pression hydraulique avec deux chambres de pression (3), dans lequel deux accumulateurs de pression (1) selon l'une quelconque des revendications précédentes sont raccordés au circuit hydraulique avec des parois de séparation fixes (7, 8) voisines l'une de l'autre et seulement une communication hydraulique, de telle manière que les forces de pression exercées sur la paroi de séparation respective (7, 8) s'éliminent dans le plan de contact des parois de séparation.

11. Accumulateur de pression hydraulique selon la revendication 10, **caractérisé en ce qu'**une tôle intermédiaire est disposée entre les parois de séparation fixes (7, 8), laquelle comporte des alésages pour la communication fluide de canaux prédéterminés des plaques de commande (7, 8).

12. Accumulateur de pression hydraulique selon la revendication 10 ou 11, **caractérisé en ce que** les plaques de commande (7, 8) sont assemblées par des boulons filetés (4) traversant les faces de bride et les bagues filaires (5, 6).
